# EUROPEAN PATENT APPLICATION

(11) **EP 4 611 467 A1**
(43) Date of publication of application: **03.09.2025**
(21) Application number: 22963192.4
(22) Date of filing: 28.10.2022
(51) Int. Cl.: H04W 74/00

(54) **METHOD AND APPARATUS FOR TRANSMITTING CONFIGURATION INFORMATION, AND READABLE STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/128395
(87) International publication number: WO 2024/087211

(57) **Abstract**

The present disclosure provides a method and apparatus for transmitting configuration information, and a readable storage medium. The method comprises: sending configuration information to a user equipment, the configuration information comprising N types of radio link control (RLC) entities corresponding to a packet data convergence protocol (PDCP) entity in the user equipment. In the method of the present disclosure, a network device sends configuration information to a user equipment, so as to configure N types of RLC entities associated with the PDCP entity to the user equipment. Therefore, the user equipment can perform effective distribution on service data according to the configuration information, so as to improve the efficiency of transmitting the service data.

## Description

### TECHNICAL FIELD

The present disclosure relates to a field of wireless communication technology, and in particular to a method and an apparatus for configuration information transmission, and a readable storage medium.

### BACKGROUND

In a 5th-generation (5G) wireless communication system, it is required to support an eXtended reality (XR) service type. In an XR service, data packet transmission may be performed by using quality of service (QoS) flow. In a transmission process, a non-access stratum (NAS) may not perform data packet split and the same QoS flow may include different data. Therefore, it is required to resolve a data split problem in an XR service scenario.

### SUMMARY

Embodiments of the present disclosure provide a method and an apparatus for configuration information transmission, and a readable storage medium.

According to a first aspect, an embodiment of the present disclosure provides a method for sending configuration information, performed by a network device, including:
sending configuration information to a user equipment (UE), in which the configuration information includes N types of radio link control (RLC) entities corresponding to a packet data convergence protocol (PDCP) entity of the UE.

In some possible implementations, N is a numeric count of service types of service data, and the configuration information is further configured to configure each type of RLC entity for transmission of service data corresponding to a service type.

In some possible implementations, the configuration information is further configured to configure a default RLC entity, wherein the default RLC entity is configured for transmission of a first service.

In some possible implementations, the each type of RLC entity includes at least one RLC entity.

In some possible implementations, the configuration information includes indication identifiers corresponding to the N types of RLC entities, and the indication identifiers indicate whether first functions of some or all types of RLC entities are activated.

In some possible implementations, the method further includes:
sending first indication information to the UE, in which the first indication information indicates to activate or deactivate first functions of some or all types of RLC entities.

In some possible implementations, the first function includes a service splitting function or a packet duplication function.

In some possible implementations, sending the first indication information to the UE includes:
sending downlink control information (DCI) to the UE, in which the DCI includes the first indication information; or
sending media access control control element (MAC CE) signaling to a UE, in which the MAC CE signaling includes an information field indicating the first indication information.

In some possible implementations, the information field includes at least one of: a bit corresponding to all types of RLC entities, a bit corresponding to each type of RLC entity, or a bit corresponding to each RLC entity, and
activation of the first function of the RLC entity corresponding to a bit is indicated in response to the bit being a first value.

In some possible implementations, the method further includes:
receiving a notification message of the UE, in which the notification message indicates that a numeric count of retransmissions of service data by an RLC entity for the first function has reached a maximum retransmission count.

According to a second aspect, an embodiment of the present disclosure provides a method for sending configuration information, performed by a UE, including:
receiving configuration information sent by a network device, in which the configuration information includes N types of RLC entities corresponding to a PDCP entity of the UE; and
sending service data to at least one type of RLC entity based on the configuration information.

In some possible implementations, N is a numeric count of service types of the service data, and the configuration information is further configured to configure each type of RLC entity for transmission of service data corresponding to a service type;
in which sending the service data to the at least one type of RLC entity based on the configuration information includes:
splitting and sending the service data to an RLC entity with a type corresponding to a service type of the service data based on the configuration information and the service type of the service data.

In some possible implementations, the configuration information is further configured to configure a default RLC entity, the default RLC entity is configured for transmission of a first service.

In some possible implementations, sending the service data to the at least one type of RLC entity based on the configuration information includes:
splitting and sending the service data to the default RLC entity in response to the service data being the first service.

In some possible implementations, sending the service data to the at least one type of RLC entity based on the configuration information includes:
splitting and sending the service data to the default RLC entity in response to the RLC entity corresponding to the service data deactivating a service splitting function.

In some possible implementations, the method further includes:
determining whether first functions of some or all types of RLC entities are activated based on indication identifiers in the configuration information.

In some possible implementations, the method further includes:
receiving first indication information sent by the network device, in which the first indication information indicates to activate or deactivate first functions of some or all types of RLC entities, and
determining whether the first functions of some or all types of RLC entities are activated based on the first indication information.

In some possible implementations, the first function includes a service splitting function or a packet duplication function.

In some possible implementations, receiving the first indication information sent by the network device includes:
receiving MAC CE signaling sent by the network device, in which the MAC CE signaling includes an information field indicating the first indication information.

In some possible implementations, determining whether the first functions of some or all types of RLC entities are activated based on the first indication information includes:
determining that a first function of an RLC entity corresponding to at least one bit is activated in response to the at least one bit in the information field being a first value.

In some possible implementations, the method further includes:
sending a notification message to the network device in response to a numeric count of retransmissions of the service data by an RLC entity for the first function reaching a maximum retransmission count.

According to a third aspect, an embodiment of the present disclosure provides an apparatus for sending configuration information. The apparatus may be used to perform steps performed by a network device in the first aspect or in any one of possible designs of the first aspect. The network device may implement functions of the above method via a form of a hardware structure, a software module, or a hardware structure plus a software module.

In case of implementing the apparatus shown in the third aspect via the software module, the apparatus may include a transceiver module, in which the transceiver module may be configured to support communication of a communication device.

In case of performing the steps in the first aspect above, the transceiver module is configured to send configuration information to the UE, in which the configuration information includes N types of RLC entities corresponding to a PDCP entity of the UE.

According to a fourth aspect, an embodiment of the present disclosure provides an apparatus for sending configuration information. The apparatus may be used to perform steps performed by a UE in the second aspect or in any one of possible designs of the second aspect. The UE may implement functions of the above method via a form of a hardware structure, a software module, or a hardware structure plus a software module.

In case of implementing the apparatus shown in the fourth aspect via the software module, the apparatus may include a transceiver module and a processing module coupled to each other, in which the transceiver module may be configured to support communication of a communication device, and the processing module may be configured to perform a processing operation on the communication device, such as generate information/a message to be sent, or obtain information/a message by processing a received signal.

In case of performing the steps in the second aspect above, the transceiver module is configured to receive configuration information sent by a network device, in which the configuration information includes N types of RLC entities corresponding to a PDCP entity of the UE; and the processing module is configured to send service data to at least one type of RLC entity based on the configuration information.

According to a fifth aspect, an embodiment of the present disclosure provides a communication apparatus, including: a processor and a memory, in which the memory is configured to store a computer program; and the processor is configured to execute the computer program to implement the first aspect or any one of possible designs of the first aspect.

According to a sixth aspect, an embodiment of the present disclosure provides a communication apparatus, including: a processor and a memory, in which the memory is configured to store a computer program; and the processor is configured to execute the computer program to implement the second aspect or any one of possible designs of the second aspect.

According to a seventh aspect, an embodiment of the present disclosure provides a computer readable storage medium for storing instructions (also referred to as a computer program or a program), which, when called and executed by a computer, cause the computer to implement the first aspect or any one of possible designs of the first aspect.

According to an eighth aspect, an embodiment of the present disclosure provides a computer readable storage medium for storing instructions (also referred to as a computer program or a program), which, when called and executed by a computer, cause the computer to implement the second aspect or any one of possible designs of the second aspect.

It may be understood that an above general description and a following detailed description are exemplary and explanatory only, and do not limit the present disclosure.

### BRIEF DESCRIPTION OF THE DRAWINGS

Drawings described herein are provided to facilitate a further understanding of the embodiments of the present disclosure, and constitute a part of this application. Exemplary embodiments of the present disclosure together with their descriptions are used to explain the embodiments of the present disclosure, and do not constitute any improper limitation on the embodiments of the present disclosure.

The accompanying drawings, which are incorporated in and constitute a part of this specification, illustrate embodiments consistent with the present disclosure and, together with the description, serve to explain the principles of the present disclosure.
FIG. 1 is a schematic diagram of an architecture of a communication system according to an embodiment of the present disclosure.
FIG. 2 is a schematic diagram of a structure of a protocol layer according to an embodiment of the present disclosure.
FIG. 3 is a flowchart of a method for configuration information transmission according to an embodiment.
FIG. 4 is a flowchart of a method for sending configuration information according to an embodiment.
FIG. 5 is a flowchart of another method for sending configuration information according to an embodiment.
FIG. 6 is a schematic diagram of a structure of an information field of media access control control element (MAC CE) signaling according to an embodiment.
FIG. 7 is a schematic diagram of a structure of an information field of media access control control element (MAC CE) signaling according to another embodiment.
FIG. 8 is a flowchart of a method for receiving configuration information according to an embodiment.
FIG. 9 is a block diagram of an apparatus for sending configuration information according to an embodiment.
FIG. 10 is a block diagram of a network device according to an embodiment.
FIG. 11 is a block diagram of an apparatus for receiving configuration information according to an embodiment.
FIG. 12 is a block diagram of a user equipment (UE) according to an embodiment.

### DETAILED DESCRIPTION

Embodiments of the present disclosure are further explained below in conjunction with accompanying drawings and specific implementations.

Reference will now be made in detail to exemplary embodiments, examples of which are illustrated in the accompanying drawings. The following description refers to the accompanying drawings in which same numbers in different accompanying drawings represent same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the present disclosure, such information should not be limited to these terms. These terms are used only to distinguish information in the same type from one another. For example, without departing from the scope of embodiments of the present disclosure, the first information may also be referred to as the second information, and similarly, the second information may be referred to as the first information. Depending on the context, words "if" and "in case that" used here may be interpreted as "when", "upon", or "in response to determining..."

The embodiments of the present disclosure are described in detail below. Examples of the embodiments are shown in the accompanying drawings, in which the same or similar labels throughout the embodiments of the present disclosure represent the same or similar elements or elements having the same or similar functions. The embodiments below with reference to the accompanying drawings are exemplary and are intended to explain the present disclosure, but should not be construed as a limitation to the present disclosure.

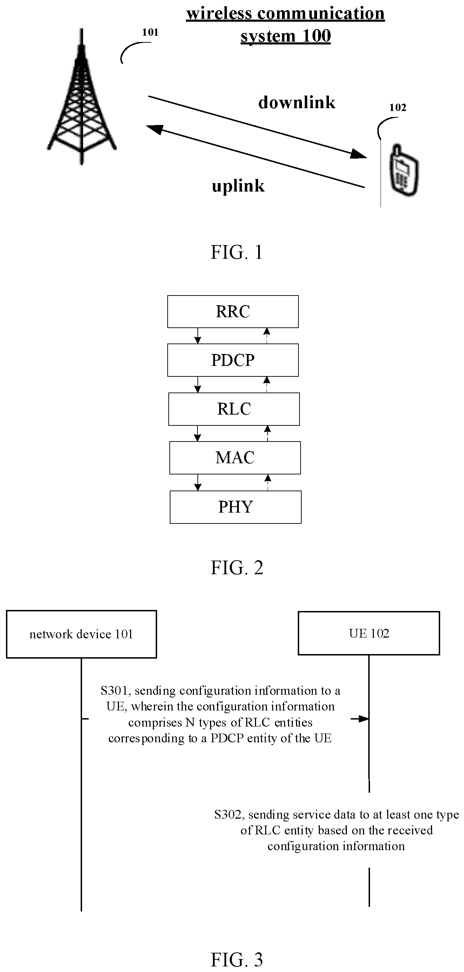

FIG. 1 is a schematic diagram of an architecture of a wireless communication system 100 according to an embodiment of the present disclosure. As shown in FIG. 1, a method for configuration information transmission in the embodiments of the present disclosure may be applied to a wireless communication system 100. The wireless communication system may include a network device 101 and a user equipment (UE) 102. The UE 102 is configured to support carrier aggregation and may be connected to a plurality of carrier units of the network device 101, in which the carrier units include a primary carrier unit and one or more secondary carrier units.

It may be understood that the above wireless communication system 100 is applicable to both a low-frequency scenario and a high-frequency scenario. An application scenario of the wireless communication system 100 includes, but is not limited to, a long term evolution (LTE) system, an LTE frequency division duplex (FDD) system, an LTE time division duplex (TDD) system, a worldwide interoperability for microwave access (WiMAX) communication system, a cloud radio access network (CRAN) system, a future 5th-generation (5G) system, a new radio (NR) communication system, or a future evolved public land mobile network (PLMN) system.

The above shown UE 102 may be a terminal, an access terminal, a terminal unit, a terminal station, a mobile station (MS), a remote station, a remote terminal, a mobile terminal, a wireless communication device, a terminal agent, or a terminal device, etc. The UE 102 may have a wireless transceiver function and may communicate with one or more network devices of one or more communication systems (e.g., wireless communication) and receive a network service provided by the network device. The network device includes, but is not limited to, the network device 101 as shown.

The UE 102 may be a cellular phone, a cordless phone, a session initiation protocol (SIP) phone, a wireless local loop (WLL) station, a personal digital assistant (PDA) device, a handheld device or a computing device with a wireless communication function, or another processing device, a vehicle-mounted device, a wearable device connected to a wireless modem, or a terminal in a future 5G network, or a terminal in a future evolved PLMN network.

The network device 101 may be an access network device (or an access network site). The access network device refers to a device that provides a network access function, such as a radio access network (RAN) base station. The network device 101 may specifically include a base station (BS), or a base station and a wireless resource management device for controlling the base station, etc. The network device 101 may also include a relay station (a relay device), an access point, a base station in a future 5G network, a base station in a future evolved PLMN network, or an NR base station, etc. The network device 101 may be a wearable device, or a vehicle-mounted device. The network device 101 may also be a communication chip with a communication module.

For example, the network device 101 includes, but is not limited to, a next generation node B (gnodeNB, gNB) in 5G, an evolved node B (eNB) in an LTE system, a radio network controller (RNC), a node B (NB) in a wideband code division multiple access (WCDMA) system, a radio controller in a CRAN system, a base station controller (BSC), a base transceiver station (BTS) in a global system for mobile communications (GSM) system or a code division multiple access (CDMA) system, a home base station (e.g., a home evolved node B, or a home node B (HNB)), a baseband unit (BBU), a transmitting and receiving point (TRP), a transmitting point (TP), or a mobile switching center.

Communication between the network device 101 and the UE 102 follows a specific structure of a protocol layer. FIG. 2 is a schematic diagram of a structure of a protocol layer according to an embodiment of the present disclosure. As shown in FIG. 2, a structure of a protocol layer of a control plane may include functions of a radio resource control (RRC) layer, a packet data convergence protocol (PDCP) layer, a radio link control (RLC) layer, a media access control (MAC) layer, a physical layer (PHY), and other protocol layers. The structure of the protocol layer of the control plane may include functions of the PDCP layer, the RLC layer, the MAC layer, the PHY, and other protocol layers.

Embodiments of the present disclosure provide a method for configuration information transmission. Please refer to FIG. 3, which is a flowchart of a method for configuration information transmission according to an embodiment. As shown in FIG. 3, the method includes steps S301 and S302.

At step S301, a network device 101 sends configuration information to a UE 102, in which the configuration information includes N types of RLC entities corresponding to a PDCP entity of the UE.

At step S302, the UE 102 sends service data to at least one type of RLC entity based on the received configuration information.

In some possible implementations, the network device 101 sends the configuration information by sending an RRC message.

In some possible implementations, the service data may be eXtended reality (XR) service data. The XR service data includes augmented reality (AR) service data, virtual reality (VR) service data, cloud gaming service data, etc.

In some possible implementations, N≥1. For example, N=2, which means that the network device 101 configures the PDCP entity of the UE to associate with two types of RLC entities.

In some possible implementations, N is related to a type of the service data.

In some possible implementations, the PDCP entity of the UE 102 receives the service data sent by the network device 101 via an upper layer, and splits and send the service data to at least one corresponding type of RLC entity.

In embodiments of the present disclosure, the network device 101 sends the configuration information to the UE 102 to configure to the UE 102 the N types of RLC entities associated with the PDCP entity. Therefore, the UE 102 may effectively split the service data based on the configuration information, to improve a transmission efficiency of the service data.

It needs to be noted that, in embodiments of the present disclosure, the network device 101 determines the configuration information, and the UE 102 splits uplink transmitting data based on the configuration information. Or, the network device 101 determines the configuration information and sends the configuration information to the UE 102, and the network device 101 splits downlink data. The following only describes an example of a scenario where the UE 102 performs splitting. However, the splitting manner illustrated and explained in following embodiments also apply to a scenario where the network device 101 performs the splitting.

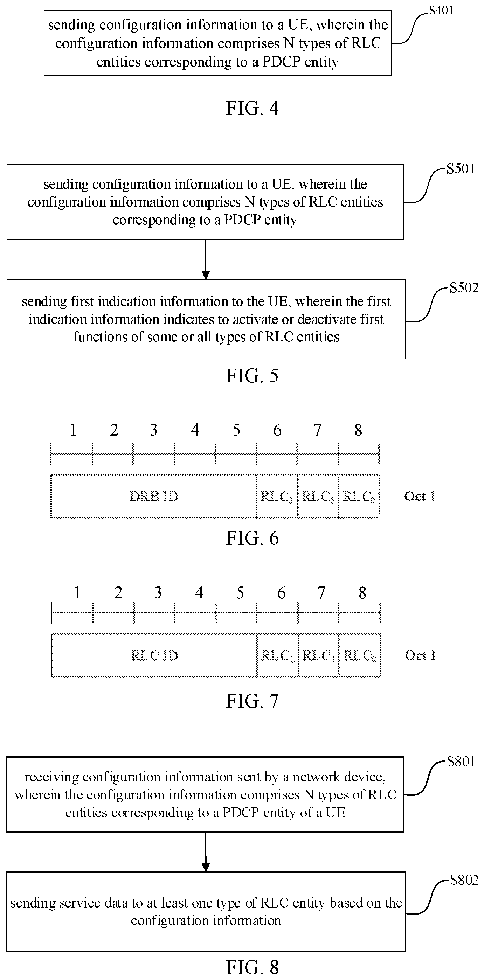

Embodiments of the present disclosure provide a method for sending configuration information, which is performed by the network device 101. Please refer to FIG. 4, which is a flowchart of a method for sending configuration information according to an embodiment. As shown in FIG. 4, the method includes a step S401.

At step S401, the network device 101 sends configuration information to a UE 102, in which the configuration information includes N types of RLC entities corresponding to a PDCP entity.

In some possible implementations, the network device 101 sends the configuration information by sending an RRC message.

In some possible implementations, the service data may be XR service data.

In some possible implementations, N≥1. For example, N=2, which means that the network device 101 configures the PDCP entity of the UE to associate with two types of RLC entities.

In some possible implementations, N is related to a type of the service data.

The service data may be categorized into different service types based on different dimensions.

In some embodiments, a classification dimension of the service type includes, but is not limited to,
importance of the service data, that is, different service types of the service data may be categorized according to different importance. For example, in response to importance levels of the service data including high, medium, and low, the service types may include a service type corresponding to a high importance level, a service type corresponding to a medium importance level, and a service type corresponding to a low importance level. For another example, a numerical value may be used to measure or represent the importance level of the service data, such as first-level service data;
an attribute of the service data, for example, different service types of the service data may be categorized according to an intra-coded picture (I frame), and a predictive-frame (P frame).
a sub-QoS flow or a QoS flow to which the service data belongs, for example, service data belonging to different sub-QoS flows corresponds to different service types, or different service data belonging to a same sub-QoS flow corresponds to different service types.
a priority level of the service data, that is, different service types of the service data are categorized according to different priority levels. For example, different priority levels are represented by high, medium, low, or a numerical value, then each priority level corresponds to one service type.
reliability levels of the service data, that is, different service types of the service data are categorized according to different reliability levels. For example, different reliability levels are represented by high, medium, low, or a numerical value, then each reliability level corresponds to one service type.
a purpose of the service data, that is, different types of the service data are categorized according to different purposes of the service data. For example, the purposes of the service data may include: a PDCP control power distribution unit (PDCP Control PDU) and a PDCP Data PDU. It needs to be noted that in a process of categorizing the service types of the service data, the service data may be categorized in units of a data packet or in units of a data packet set. In a case of categorizing the service data in units of the data packet set, all data packets in the data packet set belong to a first service type in response to a certain data packet in the data packet set being categorized as the first service type.

In some possible implementations, the each type of RLC entity includes at least one RLC entity.

In an example, in a scenario where duplication is not configured, the each type of RLC entity includes one RLC entity. The one RLC entity may have different scenarios according to different transmission modes.

For example, in a case that the transmission mode is an unacknowledged transmission mode (UM), the RLC entity can perform bi-directional transmission (supporting uplink and downlink transmission), the one RLC entity is a UM RLC entity.

For another example, in a case that the transmission mode is the UM, and the RLC entity can perform unidirectional transmission (only supporting uplink transmission or downlink transmission), the one RLC entity refers to one RLC entity in each transmission direction, i.e., the one RLC entity is an uplink UM RLC entity and a downlink UM RLC entity.

For another example, in a case that the transmission mode is an acknowledged transmission mode (AM), the one RLC entity is an AM RLC entity.

In another example, in a scenario where duplication is configured, the each type of RLC entity includes a plurality of RLC entities. The plurality of RLC entities may have different scenarios according to different transmission modes.

For example, in a case that the transmission mode is the UM, and the RLC entity can perform bi-directional transmission, the plurality of RLC entities include two UM RLC entities.

For another example, in a case that the transmission mode is the UM, the RLC entity can perform unidirectional transmission, the plurality of RLC entities include four UM RLC entities, namely, two uplink UM RLC entities and two downlink UM RLC entities.

For another example, in the AM, the plurality of RLC entities include two AM RLC entities.

In embodiments of the present disclosure, the network device 101 sends the configuration information to the UE 102 to configure to the UE 102 the N types of RLC entities associated with the PDCP entity. Therefore, the UE 102 may effectively split the service data based on the configuration information, to improve a transmission efficiency of the service data.

Embodiments of the present disclosure provide a method for sending configuration information, which is performed by a network device 101. The method includes a step S401.

At step S401, the network device 101 sends configuration information to the UE 102, in which the configuration information includes N types of RLC entities corresponding to a PDCP entity.

N is a numeric count of service types of service data, and the configuration information is further configured to configure each type of RLC entity for transmission of service data corresponding to a service type.

In some possible implementations, the numeric count of service types may be 2, and then N = 2, that is, the configuration information is configured with 2 types of RLC entities, and the each type of RLC entity may implement transmission of one service type of service data correspondingly.

In some possible implementations, the service type of the service data may include: an I frame and a P frame. The I frame is a key frame.

In this implementation, in two types of RLC entities, one type of RLC entity corresponds to a first logical channel and is configured for transmission of I frame service data, and the other type of RLC entity corresponds to a second logical channel and is configured for transmission of P frame service data.

In some possible implementations, the service type of the service data may include: data of different flows or sub-flows, such as sub-flow1 service data, and sub-flow2 service data.

In this implementation, in two types of RLC entities, one type of RLC entity is configured for transmission of the sub-flowl service data, and the other type of RLC entity is configured for transmission of the sub-flow2 service data.

In some possible implementations, the service type of the service data may include: a PDCP Control PDU and a PDCP Data PDU. The PDCP Control PDU is data generated by the PDCP, and the PDCP Data PDU is a data packet received by the PDCP from an upper layer.

The N types of RLC entities are denoted as a first-type RLC entity, a second-type RLC entity, ..., and an N-type of RLC entity.

In an embodiment, the network device may specify or protocol agree on the first-type RLC entity, or the second-type RLC entity.

In an embodiment, the network device may specify or protocol agree on a primary RLC entity, and a secondary RLC entity (an RLC entity other than the primary RLC entity).

In an embodiment, the network device may specify or protocol agree on a default RLC entity.

In this implementation, in the N types of RLC entities, the first RLC entity is configured for transmission of the PDCP Control PDU, and the second RLC entity is configured for transmission of the PDCP Data PDU.

In an example, the first RLC entity is the primary RLC entity.

In some possible implementations, the each type of RLC entity includes at least one RLC entity.

In the embodiments of the present disclosure, the network device 101 configures a numeric count of types of RLC entities associated with the PDCP entity for the UE 102 based on the type of the service data, and configures the each type of RLC entity for transmission of a corresponding type of the service data.

Embodiments of the present disclosure provide a method for sending configuration information, which is performed by the network device 101. The method includes a step S401.

At step S401, the network device 101 sends configuration information to the UE 102, in which the configuration information includes N types of RLC entities corresponding to a PDCP entity.

The configuration information also configures the N types of RLC entities to belong to different primary nodes (MNs) or secondary nodes (SNs), or belong to a same primary node or secondary node, or belong to a same cell or different cells.

In some possible implementations, the N types of RLC entities are configured for transmission of different service types of service data. For example, the N types of RLC entities corresponds to N service types of service data.

In some possible implementations, the MN and the SN may be configured for dual connectivity (DC) of the UE. In the DC, the UE maintains an RRC connection of a service cell under the MN and may be configured to connect to a service cell under the SN so as to improve data throughput.

Embodiments of the present disclosure provide a method for sending configuration information, which is performed by the network device 101. The method includes a step S401.

At step S401, the network device 101 sends configuration information to the UE 102, in which the configuration information includes N types of RLC entities corresponding to a PDCP entity.

The configuration information is further configured to configure a default RLC entity, and the default RLC entity is configured for transmission of a first service.

In some possible implementations, the default RLC entity may be one of the N types of RLC entities or be configured additionally except for the N types of RLC entities.

In an example, the default RLC entity is a primary RLC entity or another RLC entity designated by the network device.

In some possible implementations, the first service refers to a specified service type of service data, e.g., the first service is PDCP control data.

In some possible implementations, the first service is service data which is not configured with a corresponding RLC entity.

In some possible implementations, the UE 102 may submit the specified service type of the service data or the service data which is not configured with the corresponding RLC entity to the default RLC entity based on the configuration information, so as to achieve data splitting.

In embodiments of the present disclosure, the network device 101 configures the default RLC entity for the UE 102 to achieve the data splitting for the first service by the UE 102.

Embodiments of the present disclosure provide a method for sending configuration information, which is performed by the network device 101. The method includes a step S401.

At step S401, the network device 101 sends configuration information to the UE 102, in which the configuration information includes N types of RLC entities corresponding to a PDCP entity.

The configuration information includes indication identifiers corresponding to the N types of RLC entities, and the indication identifiers indicate whether first functions of some or all types of RLC entities are activated.

The first function may be a service splitting function or a packet duplication function.

In some possible implementations, in a case that the configuration information does not include the indication identifiers corresponding to the N types of RLC entities, the network device 101 configures the configuration information, it is considered that the first functions, such as the service splitting function, of the N types of RLC entities have been activated.

In some possible implementations, the indication identifier occupies one bit. The N types of RLC entities may be uniformly indicated by a same bit.

For example, in a case that the bit corresponding to the indication identifier is set as 1, the N types of RLC entities activate the service splitting function.

For another example, the bit corresponding to the indication identifier is set as 0, the N types of RLC entities deactivate the service splitting function.

In some possible implementations, the indication identifier occupies a plurality of bits. The configuration information includes a bit corresponding to each type of RLC entity to respectively indicate whether the first function, such as the service splitting function, of the each type of RLC entity is activated. In a case that a certain type of the RLC entity is indicated to activate the first function, the first functions of all RLC entities under the type are activated.

In an example, in a case that a bit corresponding to the indication identifier of any type of RLC entity is set as 1, the first function, such as the service splitting function, of the type of RLC entity is activated. In a case that a bit corresponding to the indication identifier of any type of RLC entity is set as 0, the type of RLC entity deactivates the service splitting function.

In another example, in a case that values of the plurality of bits are the same, the indication identifier indicates an activated state of the first functions of all types of RLC entities. For example, the plurality of bits are 1, it indicates that the first functions of all types of RLC entities are activated.

In some possible implementations, the indication identifier occupies the plurality of bits. Each bit indicates whether to activate or deactivate the first function of one RLC entity. For example, the configuration information includes a bit corresponding to each RLC entity so as to respectively indicate that whether a single RLC entity activates the first function, such as the service splitting function.

In an example, in a case that a bit corresponding to the indication identifier of any RLC entity is set as 1, the first function, such as the service splitting function, of the RLC entity is activated. In a case that a bit corresponding to the indication identifier of any RLC entity is set as 0, the first function of the RLC entity is deactivated.

In some possible implementations, for a deactivated RLC entity, the UE 102 may split associated service data to the default RLC entity.

A specific example is given below for convenience of understanding.

Three types of RLC entities corresponding to the PDCP entity configured by the configuration information are: a first RLC entity, a second RLC entity, and a third RLC entity. The first RLC entity is configured for transmission of a first service type of service data or control PDU, the second RLC entity is configured for transmission of a second service type of service data, and the third RLC entity is configured for transmission of a third service type of service data.

It needs to be noted that that a naming manner of the first RLC entity, the second RLC entity, or the third RLC entity in the embodiments of the present disclosure is for reference and distinction only and does not limit the RLC entity. For example, the first RLC entity may also be named a primary RLC entity, and the second RLC entity or the third RLC entity may also be named a secondary RLC entity.

In this example, the configuration information also configures activation of a service splitting function of the first RLC entity, activation of a service splitting function of the second RLC entity, and deactivation of a service splitting function of the third RLC entity.

According to the configuration information, a PDCP layer of the UE 102 sends the first service type of service data or control PDU to the first RLC entity and sends the second service type of service data to the second RLC entity in a service splitting process.

In addition, in this example, in response to the configuration information being also configured with the default RLC entity, the UE 102 may submit the third service type of service data to the default RLC entity. Therefore, in a scenario of deactivation of the third RLC entity, a corresponding service may be split.

In embodiments of the present disclosure, in delivered configuration information, the network device 101 synchronously indicates whether the first functions, such as the service splitting function, of some or all of the RLC entities are activated, so that the UE 102 may learn whether the first functions, such as the service diversion functions, of some or all of the RLC entities are activated, based on the configuration information.

Embodiments of the present disclosure provide a method for sending configuration information, which is performed by the network device 101. Please refer to FIG. 5, which is a flowchart of a method for sending configuration information according to an embodiment. As shown in FIG. 5, the method includes steps S501 to S502.

At step S501, the network device 101 sends configuration information to a UE 102, in which the configuration information includes N types of RLC entities corresponding to a PDCP entity.

At step S502, the network device 101 sends first indication information to the UE 102, in which the first indication information indicates to activate or deactivate first functions of some or all types of RLC entities.

A sequence of S501 and S502 is only shown as an example. For example, steps S501 and S502 may be executed simultaneously.

In some possible implementations, the network device 101 may send the first indication information by means of sending downlink control information (DCI) or media access control control element (MAC CE) signaling.

In some possible implementations, the first indication information may uniformly indicate whether the first functions of the N types of RLC entities are activated, that is, all types of split RLC entities are uniformly controlled.

For example, one bit uniformly indicates whether the first functions of the N types of RLC entities are activated.

In some possible implementations, the first indication information corresponds to a plurality of bits. Each bit respectively indicates whether the first function of one type of RLC entity is activated.

For example, a bit corresponding to a type of RLC entity in the first indication information indicates whether the first function, such as the service splitting function, of the type of RLC entity is activated. In a case that a certain type of RLC entity is indicated to activate the first function, all RLC entities in the certain type activate the first function.

In an example, in a case that a bit corresponding to any type of RLC entity is set as 1, the type of RLC entity activates the first function, such as the service splitting function. In a case that a bit corresponding to any type of RLC entity is set as 0, the type of RLC entity deactivates the service splitting function.

In some possible implementations, the first indication information corresponds to a plurality of bits. Each bit indicates activating or deactivating the first function of each RLC entity. For example, a bit corresponding to each RLC entity in the first indication information indicates whether each split RLC entity activates the first function, such as the service splitting function.

In an example, in a case that a bit corresponding to any RLC entity is set as 1, the RLC entity activates the first function, such as the service splitting function. In a case that a bit corresponding to any RLC entity is set as 0, the RLC entity deactivates the first function.

In some possible implementations, the first function includes a service splitting function or a PDCP packet duplication function.

In the embodiments of the present disclosure, the network device 101 indicates whether the first functions of some or all of the RLC entities are activated by means of a dynamic indication, so as to adaptively adjust whether the RLC entities activate the first function.

Embodiments of the present disclosure provide a method for sending configuration information, which is performed by the network device 101. The method includes steps S501 to S502'.

At stepS501, the network device 101 sends configuration information to the UE 102, in which the configuration information includes N types of RLC entities corresponding to a PDCP entity.

At stepS502', the network device 101 sends DCI to the UE 102, in which the DCI includes the first indication information.

The first indication information indicates to activate or deactivate first functions of some or all types of RLC entities.

In some possible implementations, the first function includes a service splitting function or a PDCP packet duplication function.

In the embodiments of the present disclosure, the network device 101 dynamically delivers the first indication information via the DCI, so as to dynamically configure whether the N types of RLC entities activate the first function.

Embodiments of the present disclosure provide a method for sending configuration information, which is performed by the network device 101. The method includes steps S501 to S502".

At stepS501, the network device 101 sends configuration information to the UE 102, in which the configuration information includes N types of RLC entities corresponding to a PDCP entity.

At step S502", the network device 101 sends MAC CE signaling to the UE 102, in which the MAC CE signaling includes an information field indicating the first indication information.

The first indication information indicates to activate or deactivate first functions of some or all types of RLC entities.

In some possible implementations, the information field includes at least one of:
a bit corresponding to all types of RLC entities,
a bit corresponding to each type of RLC entity; or
a bit corresponding to each RLC entity.

In some possible implementations, the information field includes a bit corresponding to all types of RLC entities, that is, the information field uniformly indicates whether all types of RLC entities activate the first function by one bit.

For example, in a case that the information field includes one bit corresponding to all types of RLC entities, in response to the one bit being set as a first value (e.g., 1), it is indicated that the first functions of all types of RLC entities have been activated; in response to the one bit being set as a second value (e.g., 0), it is indicated that the first functions of all types of RLC entities have been deactivated. Furthermore, an activated state of the first function of any type of RLC entity applies to all RLC entities under this type.

In some possible implementations, in a case that the information field includes the bit corresponding to the each type of RLC entity, the information field respectively indicates whether the first function of the each type of RLC entity is activated. For example, the information field includes the bit corresponding to the each type of RLC entity. Taking three types of RLC entities as an example, a structure of the information field may refer to an example shown in FIG. 6.

In a case that a bit corresponding to any type of RLC entity is set as the first value (e.g., 1), the type of RLC entity activates the first function, such as the service splitting function. In a case that a bit corresponding to the indication identifier of any type of RLC entity is set as the second value (e.g., 0), the type of RLC entity deactivates the first function. In a case that a certain type of RLC entity indicates to activate the first function, the first functions of all RLC entities under this type are activated.

In a case that the bit corresponding to the each type of RLC entity is the same (e.g., all is set as 1), the information field indicates that the first functions of all types of RLC entities have activated.

In some possible implementations, in a case that the information field includes the bit corresponding to the each RLC entity, the information field respectively indicates whether the each RLC entity activates the first function. For example, the information field includes the bit corresponding to the each RLC entity. Taking three types of RLC entities as an example, a structure of the information field may refer to an example shown in FIG. 7.

In a case that the bit corresponding to any RLC entity is set as the first value (e.g., 1), the RLC entity activates the first function, such as the service splitting function. In a case that the bit corresponding to any RLC entity is set as the second value (e.g., 0), the RLC entity deactivates the first function.

In some possible implementations, the first function includes a service splitting function or a PDCP packet duplication function.

Several specific examples are given below for convenience of understanding the embodiment.

### Example 1:

FIG. 6 shows a structure of an information field for indicating whether to activate a service splitting function. As shown in FIG. 6, the information field includes a first part of bits and a second part of bits.

The first part of bits indicates a data radio bearer identifier (DRB ID). Assumed that a length of the first part of bits is 5 bits, one DRB may correspond to a plurality of service types of service data, i.e., correspond to a plurality of types of RLC entities.

The second part of bits indicates whether the each type of RLC entity activates the service splitting function. Taking three types of RLC entities as an example, a length of the second part of bits is 3 bits. The each type of RLC entity occupies 1 bit (here, it is assumed that the each type of RLC entity is configured with one RLC entity). The each type of RLC entity is configured for transmission of service data corresponding to a service type.

In RLC*ᵢ* "i" represents an RLC entity for splitting configured for a DRB, for example, a logical channel identifier of a secondary RLC entity in an ascending order in a primary cell group (MCG) and a secondary cell group (SCG), that is, "i" represents an RLC type or an RLC entity. In FIG. 6, "i" may be 0, 1, or 2.

In a case where a bit corresponding to the RLCᵢ is set as 1, an RLC*ᵢ* entity has activated the service splitting function. In a case where the bit corresponding to the RLC*ᵢ* is set as 0, the RLC*ᵢ* entity has deactivated the service splitting function.

### Example 2:

FIG. 7 shows a structure of an information field for indicating whether to activate a PDCP packet duplication function. As shown in FIG. 7, the information field includes a first part of bits and a second part of bits.

The first part of bits indicates a first radio link control identifier (RLC ID). Assumed that a length of the first part of bits is 5 bits.

The second part of bits indicates whether a second RLC entity activates a packet duplication function. Assumed that a length of the second part of bits is 3 bits, where "i" in RLC*ᵢ* is configured for the second RLC entity, for example, a logical channel identifier of a secondary RLC entity in an ascending order in an MCG and an SCG, that is, "i" represents an index of the second RLC entity. In FIG. 7, "i" may be 0, 1, or 2. Three RLC entities are taken as an example here.

The first RLC entity and the second RLC entity may belong to a same type of RLC entity. The first RLC entity may also be called as a duplicated RLC entity or a primary RLC entity, and the second RLC entity may also be called as a duplicated RLC entity or a secondary RLC entity.

In a case where a bit corresponding to the RLCᵢ is set as 1, an RLC*ᵢ* entity has activated the packet duplication function. In a case where the bit corresponding to the RLC*ᵢ* is set as 0, the RLC*ᵢ* entity has deactivated the packet duplication function.

In this example, a configuration of whether to activate or deactivate a PDCP packet duplication function may be refined to the RLC entity, for example, the packet duplication function of the second RLC entity (or a duplicated RLC entity) is configured to be activated or deactivated for the first RLC entity (or a duplicated RLC entity), to provide an indication for service splitting of the UE 102.

Embodiments of the present disclosure provide a method for sending configuration information, which is performed by the network device 101. The method includes steps S501 to S502-1.

At step S501, the network device 101 sends configuration information to the UE 102, in which the configuration information includes N types of RLC entities corresponding to a PDCP entity.

At step S502-1, a notification message of the UE is received, in which the notification message indicates that a numeric count of retransmissions of service data by an RLC entity for the first function has reached a maximum retransmission count.

In some possible implementations, the step S502-1 may include: in response to receiving the notification message from the UE 102, the network device 101 sends first indication information to the UE 102. The first indication information indicates to deactivate a first function of the RLC entity corresponding to the notification message.

In some possible implementations, the first function includes a service splitting function or a PDCP packet duplication function.

In some possible implementations, in response to receiving the notification message, it is represented that the numeric count of retransmissions of service data by the RLC entity for the first function has reached the maximum retransmission count, which indicates that the RLC entity may no longer perform the retransmission, or a communication status of the RLC entity may have problems or be faulty, and may not be suitable for splitting.

On the basic of receiving the notification message, the network device 101 may send the first indication information in time to indicate the UE 102 to deactivate the first function of the RLC entity. Therefore, the UE 102 may adjust a splitting manner in time. For example, the UE 102 does not send the service data to the RLC entity that deactivates the first function, but sends service data with a service type corresponding to the RLC entity that deactivates the first function to a default RLC entity, so as to ensure that normal splitting of the service type of service data may still be realized and an efficiency of data transmission may be ensured.

In an example, in a case where the RLC entities configured for the service splitting function reach the maximum retransmission count, the UE 102 sends the notification message to the network device 101.

In an example, in a case where the RLC entities configured for the packet duplication function reach the maximum retransmission count, the UE 102 sends the notification message to the network device 101.

In the embodiments of the present disclosure, the network device 101 may dynamically deactivate a first function corresponding to an RLC entity in response to receiving the notification message from the UE 102.

Embodiments of the present disclosure provide a method for receiving configuration information, which is performed by a UE 102. Please refer to FIG. 8, which is a flowchart of a method for receiving configuration information according to an embodiment. As shown in FIG. 8, the method includes steps S801 to S802.

At step S801, the UE 102 receives configuration information sent by a network device 101, in which the configuration information includes N types of RLC entities corresponding to a PDCP entity of the UE.

At step S802, the UE 102 sends service data to at least one type of RLC entity based on the configuration information.

In some possible implementations, N is related to a type of the service data.

In some possible implementations, a PDCP layer of the UE 102 splits service data according to a service type, and sends service data corresponding to the service type to different types of RLC entities.

In some possible implementations, the service data may be XR service data.

In some possible implementations, the each type of RLC entity includes at least one RLC entity.

In an example, in a scenario where duplication is not configured, the each type of RLC entity includes one RLC entity. The one RLC entity may have different scenarios according to different transmission modes.

For example, in a case that the transmission mode is an UM, the RLC entity can perform bi-directional transmission (supporting uplink and downlink transmission), the one RLC entity is a UM RLC entity.

For another example, in a case that the transmission mode is the UM, and the RLC entity can perform unidirectional transmission (only supporting uplink transmission or downlink transmission), the one RLC entity refers to one RLC entity in each transmission direction, i.e., the one RLC entity is an uplink UM RLC entity and a downlink UM RLC entity.

For another example, in a case that the transmission mode is an AM, the one RLC entity is an AM RLC entity.

In another example, in a scenario where duplication is configured, the each type of RLC entity includes a plurality of RLC entities. The plurality of RLC entities may have different scenarios according to different transmission modes.

For example, in the UM, the RLC entity may perform bi-directional transmission, and the plurality of RLC entities include two UM RLC entities.

For another example, in a case that the transmission mode is the UM, and the RLC entity can perform bi-directional transmission, the plurality of RLC entities include four UM RLC entities, namely, two uplink UM RLC entities and two downlink UM RLC entities.

For another example, in the AM, the plurality of RLC entities include two AM RLC entities.

In some possible implementations, the PDCP entity of the UE 102 receives the service data sent by the network device 101 via an upper layer, and splits and sends the service data to at least one corresponding type of RLC entity.

In the embodiments of the present disclosure, the UE 102 learn the N types of RLC entities associated with the PDCP entity based on the configuration information of the network device 101, so that the UE 102 may effectively split the service data according to the configuration information to improve a transmission efficiency of the service data.

Embodiments of the present disclosure provide a method for receiving configuration information, which is performed by a UE 102. The method includes steps S801 to S802-1.

At step S801, the UE 102 receives configuration information sent by the network device 101, in which the configuration information includes N types of RLC entities corresponding to a PDCP entity of the UE.

N is a numeric count of service types of service data, and the configuration information is further configured to configure each type of RLC entity for transmission of service data corresponding to a service type.

At S802-1, the UE 102 splits and sends the service data to an RLC entity with a type corresponding to a service type of the service data based on the configuration information and the service type of the service data.

In some possible implementations, the each type of RLC entity includes at least one RLC entity.

In some possible implementations, the numeric count of service types may be 2, and then N = 2, that is, the configuration information is configured with 2 types of RLC entities, and the each type of RLC entity may implement transmission of one service type of service data correspondingly.

In some possible implementations, the service type of the service data may include an I frame and a P frame.

In two types of RLC entities, one type of RLC entity corresponds to a first logical channel and is configured for transmission of I frame service data, and the other type of RLC entity corresponds to a second logical channel and is configured for transmission of P frame service data.

In some possible implementations, the service type of the service data may include: data of different flows or sub-flows, such as sub-flow1 service data, and sub-flow2 service data.

In two types of RLC entities, one type of RLC entity is configured for transmission of the sub-flow1 service data, and the other type of RLC entity is configured for transmission of the sub-flow2 service data.

In some possible implementations, the service type of the service data may include: a PDCP Control PDU and a PDCP Data PDU.

The N types of RLC entities are denoted as a first-type RLC entity, a second-type RLC entity, ..., and an N-type of RLC entity.

In an embodiment, the network device may specify or protocol agree on the first-type RLC entity, or the second-type RLC entity.

In an embodiment, the network device may specify or protocol agree on a primary RLC entity, and a secondary RLC entity (an RLC entity other than the primary RLC entity).

In an embodiment, the network device may specify or protocol agree on a default RLC entity.

In this implementation, in the N types of RLC entities, the first RLC entity is configured for transmission of the PDCP Control PDU, and the second RLC entity is configured for transmission of the PDCP Data PDU. In an example, the first RLC entity is the primary RLC entity.

In the embodiments of the present disclosure, the UE 102 performs effective data splitting according to the service type corresponding to the service data.

Embodiments of the present disclosure provide a method for receiving configuration information, which is performed by a UE 102. The method includes steps S801 to S802-2.

At stepS801, the UE 102 receives configuration information sent by the network device 101, in which the configuration information includes N types of RLC entities corresponding to a PDCP entity of the UE.

The configuration information is further configured to configure a default RLC entity, and the default RLC entity is configured for transmission of a first service.

At step S802-2, the UE 102 splits and sends the service data to the default RLC entity in response to the service data being the first service.

In some possible implementations, the default RLC entity may be one of the N types of RLC entities or be configured additionally except for the N types of RLC entities.

In an example, the default RLC entity is a first RLC entity, a primary RLC entity or another RLC entity designated by the network device.

In some possible implementations, the first service refers to a specified service type of service data, e.g., the first service is PDCP control data.

In some possible implementations, the first service is service data which is not configured with a corresponding RLC entity.

In some possible implementations, the UE 102 may submit the specified service type of the service data or the service data which is not configured with the corresponding RLC entity to the default RLC entity, so as to achieve data splitting.

Embodiments of the present disclosure provide a method for receiving configuration information, which is performed by a UE 102. The method includes steps S801 to S802-3.

At step S801, the UE 102 receives configuration information sent by the network device 101, in which the configuration information includes N types of RLC entities corresponding to a PDCP entity of the UE.

The configuration information is further configured to configure a default RLC entity, and the default RLC entity is configured for transmission of a first service.

At step S802-3, the UE 102 splits and sends the service data to the default RLC entity in response to the RLC entity corresponding to the service data deactivating a service splitting function.

In some possible implementations, the UE 102 receives the configuration information, it is considered that the N types of RLC entities in the configuration information have activated the service splitting function.

In some possible implementations, the configuration information includes indication identifiers corresponding to the N types of RLC entities, and the indication identifiers indicate whether first functions of some or all types of RLC entities are activated. At this time, before the step S802-3, the UE 102 learns whether the N types of RLC entities activate the first functions according to the following step S800-11.

At step S800-11, the UE 102 determines whether first functions of some or all types of RLC entities are activated based on indication identifiers in the configuration information.

In some possible implementations, the indication identifier occupies one bit, and the configuration information uniformly indicates whether the first functions, such as the service splitting function, of the N types of RLC entities are activated by using a same bit, that is, whether first functions of all types of RLC entities are activated.

For example, in a case that the bit corresponding to the indication identifier is set as 1, the N types of RLC entities activate the service splitting function. For another example, the bit corresponding to the indication identifier is set as 0, the N types of RLC entities deactivate the service splitting function.

In some possible implementations, the indication identifier occupies a plurality of bits. The configuration information includes a bit corresponding to each type of RLC entity to respectively indicate whether the first function, such as the service splitting function, of the each type of RLC entity is activated.

In an example, in a case that a bit corresponding to the indication identifier of any type of RLC entity is set as 1, the first function, such as the service splitting function, of the type of RLC entity is activated. In a case that a bit corresponding to the indication identifier of any type of RLC entity is set as 0, the type of RLC entity deactivates the service splitting function. In a case that a certain type of the RLC entity is indicated to activate the first function, the first functions of all RLC entities under the type are activated.

In another example, in a case that values of the plurality of bits are the same, the indication identifier indicates an activated state of the first functions of all types of RLC entities. For example, the plurality of bits are 1, it indicates that the first functions of all types of RLC entities are activated.

In some possible implementations, the indication identifier occupies a plurality of bits. Each bit indicates whether to activate or deactivate the first function of one RLC entity. For example, the configuration information includes a bit corresponding to each RLC entity so as to respectively indicate that whether a single RLC entity activates the first function, such as the service splitting function.

In an example, in a case that a bit corresponding to the indication identifier of any RLC entity is set as 1, the first function, such as the service splitting function, of the RLC entity is activated. In a case that a bit corresponding to the indication identifier of any RLC entity is set as 0, the first function of the RLC entity is deactivated.

In some possible implementations, the UE 102 determines whether the first functions, such as the service splitting function, of some or all types of RLC entities are activated based on received first indication information. For details of this method, reference can be made to a description in following embodiments.

In some possible implementations, for an RLC entity with the service splitting function activated, a PDCP of the UE 102 may deliver service data corresponding to a service type to an associated RLC entity.

In some possible implementations, for an RLC entity with the service splitting function deactivated, a PDCP of the UE 102 may deliver service data with a service type corresponding to the RLC entity to the default RLC entity. Splitting of such type of service data may also be ensured.

In the embodiments of the present disclosure, the UE 102 learns whether the first functions, such as the service splitting function, of some or all types of RLC entities are activated based on the configuration information. In a case where the service splitting function of any RLC entity is deactivated, the UE 102 may perform data splitting on the default RLC entity.

Embodiments of the present disclosure provide a method for receiving configuration information, which is performed by a UE 102. The method includes steps S801, S800-21, S800-22, and S802.

At step S801, the UE 102 receives configuration information sent by the network device 101, in which the configuration information includes N types of RLC entities corresponding to a PDCP entity of the UE.

At step S800-21, the UE 102 receives first indication information sent by the network device 101, in which the first indication information indicates to activate or deactivate first functions of some or all types of RLC entities.

At step S800-22, the UE 102 determines whether the first functions of some or all types of RLC entities are activated based on the first indication information.

At step S802, the UE 102 sends service data to at least one type of RLC entity based on the configuration information.

In some possible implementations, the first indication information may uniformly indicate whether the first functions of the N types of RLC entities are activated, that is, indicate whether the first functions of all types of RLC entities are activated. For example, one bit uniformly indicates whether the first functions of the N types of RLC entities are activated. In a case where a certain type of RLC entity indicates to activate the first function, all RLC entities under the type activate the first function.

In some possible implementations, the first indication information may respectively indicate whether a first function of each type of all N types of RLC entities or some of the N types of RLC entities is activated. For example, each type of RLC entity has a corresponding bit, and each bit indicates whether the first function of a corresponding type of RLC entity is activated. In a case where a certain type of RLC entity indicates to activate the first function, all RLC entities under this type activate the first function.

In some possible implementations, the first indication information respectively indicates whether each RLC entity activates the first function. For example, the each RLC entity has a corresponding bit, and each bit indicates whether a corresponding RLC entity activates the first function.

In some possible implementations, the UE 102 receiving the first indication information may include receiving DCI sent by the network device 101, to obtain the first indication information in the DCI.

In some possible implementations, the UE 102 receiving the first indication information may include receiving MAC CE signaling sent by the network device 101, in which the MAC CE signaling includes an information field indicating the first indication information.

In some possible implementations, the first function includes a service splitting function or a packet duplication function.

In some possible implementations, in a case where the first function is the service splitting function, the step S802 in an implementation may refer to a following step S802-3.

At step S802-3, the UE 102 splits and sends the service data to the default RLC entity in response to an RLC entity corresponding to the service data deactivating the service splitting function.

In the embodiments of the present disclosure, the UE 102 learns whether some or all RLC entities have activated the first function based on the first indication information, so that a splitting manner may be adjusted in time.

Embodiments of the present disclosure provide a method for receiving configuration information, performed by a UE 102. The method includes steps S801, S800-21', S800-22', and S802.

At step S801, the UE 102 receives configuration information sent by the network device 101, in which the configuration information includes N types of RLC entities corresponding to a PDCP entity of the UE.

At step S800-21', the UE 102 receives MAC CE signaling sent by the network device 101, in which the MAC CE signaling includes an information field indicating the first indication information.

At step S800-22, the UE 102 determines that a first function of an RLC entity corresponding to at least one bit is activated in response to the at least one bit in the information field being a first value.

At step S802, the UE 102 sends service data to at least one type of RLC entity based on the configuration information.

In some possible implementations, the information field includes at least one of:
a bit corresponding to all types of RLC entities,
a bit corresponding to each type of RLC entity, or
a bit corresponding to each RLC entity.

In some possible implementations, the information field includes one bit indicating an activated state of the first function, which uniformly indicates whether all types of RLC entities activate the first function.

For example, in response to the one bit being set as a first value (e.g., 1), it is indicated that the first functions of all types of RLC entities have been activated; in response to the one bit being set as a second value (e.g., 0), it is indicated that the first functions of all types of RLC entities have been deactivated. Furthermore, an activated state of the first function of any type of RLC entity applies to all RLC entities under this type.

In some possible implementations, the information field includes more than one bit indicating the activated state of the first function. For example, the information field includes the bit corresponding to the each type of RLC entity. Please refer to FIG. 6.

In a case that a bit corresponding to any type of RLC entity is set as the first value (e.g., 1), the type of RLC entity activates the first function, such as the service splitting function. In a case that a bit corresponding to the indication identifier of any type of RLC entity is set as the second value (e.g., 0), the type of RLC entity deactivates the first function. In a case that a certain type of RLC entity indicates to activate the first function, the first functions of all RLC entities under this type are activated.

In a case where values of more than one bit are the same, for example, all is set as 1, it is indicated that the first functions of all types of RLC entities are activated.

In some possible implementations, the information field includes more than one bit indicating the activated state of the first function. For example, the information field includes the bit corresponding to the each RLC entity. Please refer to FIG. 7.

In a case that the bit corresponding to any RLC entity is set as the first value (e.g., 1), the RLC entity activates the first function, such as the service splitting function. In a case that the bit corresponding to any RLC entity is set as the second value (e.g., 0), the RLC entity deactivates the first function.

In some possible implementations, the first function includes a service splitting function or a packet duplication function.

In the embodiments of the present disclosure, the network device 101 dynamically indicates activation or deactivation of the first function of some or all RLC entities via the MAC CE signaling, and the UE 102 learns the activation state of the RLC entity according to the MAC CE signaling in time, so as to adjust a splitting manner in time.

Embodiments of the present disclosure provide a method for receiving configuration information, performed by a UE 102. The method includes steps S801, S800-21, S800-22, S802, and S803.

At step S801, the UE 102 receives configuration information sent by the network device 101, in which the configuration information includes N types of RLC entities corresponding to a PDCP entity of the UE.

At step S800-21, the UE 102 receives first indication information sent by the network device 101, in which the first indication information indicates to activate or deactivate first functions of some or all types of RLC entities.

At step S800-22, the UE 102 determines whether the first functions of some or all types of RLC entities are activated based on the first indication information.

At step S802, the UE 102 sends service data to at least one type of RLC entity based on the configuration information.

At S803, the UE 102 sends a notification message to the network device 101 in response to a numeric count of retransmissions of the service data by an RLC entity for the first function reaching a maximum retransmission count.

In some possible implementations, the first function includes a service splitting function or a PDCP packet duplication function.

In some possible implementations, in a case where the RLC entities configured for the service splitting function reach the maximum retransmission count, the UE 102 sends the notification message to the network device 101, which indicates that the RLC entities may no longer perform the retransmission, or a communication status of the RLC entities may have problems or be faulty, and may not be suitable for splitting.

In some possible implementations, in a case where the RLC entities configured for the packet duplication function reach the maximum retransmission count, the UE 102 sends the notification message to the network device 101.

In some possible implementations, the network device 101 may dynamically deactivate the first function corresponding to an RLC entity in response to receiving the notification message from the UE 102.

In the embodiments of the present disclosure, in response to the RLC entities configured for the first function reaching the maximum retransmission count, the UE 102 may report to the network device 101 in time, so that the network device 101 may adjust the activation state in time, for example, deactivating the first function of a certain RLC entity. Further, the UE 102 may adjust the splitting manner in time, for example, instead of sending the service data to the RLC entity that deactivates the first function, service data with a service type corresponding to the RLC entity that deactivates the first function is sent to the default RLC entity, so as to ensure that normal splitting of the service type of service data may still be realized and an efficiency of data transmission may be ensured.

Several specific examples are given below for better understanding of embodiments of the present disclosure.

### Example 1:

In a service splitting scenario for a specific service (e.g., an XR service), the network device 101 configures for the UE 102 that: a PDCP entity corresponds to N types of RLC entities, in which N corresponds to a service type classification, for example, first-type service data, second-type service data, ..., and Nth-type service data.

The service type classification may be defined in a plurality of dimensions, including but not limited to: a classification based on an importance of the service data, a classification based on an attribute of the service data, a classification based on a sub QoS flow or a QoS flow to which the service data belongs, a classification based on a priority of the service data, a classification based on reliability of the service data, or a classification based on an application purpose of the service data. For details, please refer to a description in above embodiments.

As an embodiment of this example, the network device 101 specifies an RLC entity for transmission of different service types, i.e., performs a splitting operation. For example, the network device 101 configures 2 types of RLC entities including a first-type RLC entity and a second-type RLC entity, respectively. The two types of RLC entities respectively correspond to the first-type service data, such as sending of I frame service data, and the second-type service data, such as sending of P frame service data. For example, the first-type RLC entity corresponds to logical channel 1 and is configured for transmission of the I frame service data; the second-type RLC entity corresponds to logical channel 2 and is configured for transmission of the P frame service data.

As an embodiment of this example, when the UE 102 sends data uplink, a PDCP layer needs to deliver the data to a corresponding type of RLC entity for transmission according to different service types of the service data. The PDCP layer may decide the service type of each data packet based on each data packet and deliver the data packet; or make batch decisions in a data packet set. For example, after splitting and decision are performed according to a service type of a data packet in the data packet set, other data packets in the data packet set may also be delivered to a same type of RLC entity for transmission. In this way, there is no need to split and decide all data packets one by one, so as to improve a decision efficiency.

As an embodiment of this example, the each type of RLC entity corresponds to at least one UM entity (supporting both uplink and downlink), or at least two UM entities (only supporting uplink or downlink), or at least one AM entity.

As an embodiment of this example, the network device 101 may specify an RLC entity for transmission of different service types which may belong to different MN nodes or SN nodes, a same MN node or SN node, or a same cell or different cells.

As an embodiment of this example, a specified type of RLC entity (such as a first RLC entity or a primary RLC entity) may implement transmission of a specified type of service, such as a control PDU. Or, some service types are not configured with the RLC entities, then the default RLC entity may be configured for transmission, such as the first RLC entity or the primary RLC entity.

It needs to be noted that for a duplication scenario, a transmission of the service data may be in a same cell or carrier.

Examples under this example are as follows:
Instance 1: the network device 101 configures a first RLC entity for type 1 data transmission, a second RLC entity for type 2 data transmission, and so on.
Instance 2: the network device 101 configures a first RLC entity for type 1 data transmission and/or a control PDU, a second RLC entity for type 2 data transmission, and a third RLC entity for type 3 data transmission.

Naming of each RLC entity is for reference and distinction only and does not limit the each RLC entity. For example, the first RLC entity may also be called as a primary RLC entity, and the second RLC entity or the third RLC entity may also be called as secondary RLC entities.

### Example 2:

A transmission state of the service splitting agreed via a protocol or configured by the network device 101, that is, whether the service splitting function is enabled, whether the service splitting function is activated, or whether the service splitting function is used.

As an embodiment of this example, the network device 101 performs a configuration as shown in the example 1, then it is considered that the service splitting function is enabled or activated, that is, an upper layer performs the configuration in the example 1, then it is considered that the service splitting function is enabled, without necessary to activate the function again.

As an embodiment of this example, the network device 101 indicates whether an initial state of the service splitting function is enabled during the configuration. For example, during the configuration, a service splitting function of the first RLC entity (configured for type 1 data transmission) is enabled, a service splitting function of the second RLC entity (configured for type 2 data transmission) is disabled, and so on.

Examples of this example are as follows:
Instance 1: the network device 101 configures the first RLC entity (configured for the type 1 data transmission) with an activated service splitting function, the second RLC entity (used the for type 2 data transmission) with an activate service splitting function, and so on.
Instance 2: the network device 101 configures the first RLC entity (configured for the type 1 data transmission and/or a control PDU) with the activated service splitting function, the second RLC entity (configured for the type 2 data transmission) with the activated service splitting function, a third RLC entity or (configured for type 3 data transmission) with a deactivated service splitting function, and so on.

Naming of each RLC entity is for reference and distinction only and does not limit the each RLC entity. For example, the first RLC entity may also be called as a primary RLC entity, the second RLC entity may also be called as a secondary RLC entity 1, or the third RLC entity may also be called as a secondary RLC entity 2.

As an embodiment of the example 2, transmission of service data associated with an RLC entity whose splitting function is deactivated may be implemented using the default RLC entity, such as the first RLC entity or the primary RLC entity.

For example, in the example 2 above, the type 3 data transmission may use the primary RLC entity for transmission.

As an embodiment of the example 2, an MAC CE or DCI or RRC may be used to dynamically activate (or enable/disable) a splitting state or the service splitting function. An RRC reconfiguration message may indicate an initial state of whether the splitting function of the RLC entity is activated.

Instance 1: the MAC CE indicates activation/deactivation of the service splitting function. The following are examples of three types of RLC entities, but may not be limited to indicate by more bits than that in the example.

FIG. 6 is a schematic diagram of an MAC CE indicating an RLC entity to activate/deactivate a service splitting function (PDCP split).

As shown in FIG. 6, the information field includes a first part of bits and a second part of bits.

The first part of bits indicates a DRB ID. Assumed that a length of the first part of bits is 5 bits, one DRB may correspond to service data of a plurality of service types, i.e., correspond to a plurality of types of RLC entities.

The second part of bits indicates whether the each type of RLC entity activates the service splitting function. Taking three types of RLC entities as an example, a length of the second part of bits is 3 bits. The each type of RLC entity occupies 1 bit (assumed that the each type of RLC entity is configured with one RLC entity). The each type of RLC entity is configured for transmission of service data corresponding to a service type. In RLCᵢ, *"i"* represents an RLC entity for splitting configured for the DRB, for example, a logical channel identifier of a secondary RLC entity in an ascending order in an MCG and an SCG, that is, *"i"* represents an RLC type or an RLC entity. In FIG. 6, *"i"* may be 0, 1, or 2.

When a bit corresponding to the RLCᵢ is set as 1, an RLC*ᵢ* entity has activated the service splitting function. When the bit corresponding to the RLC*ᵢ* is set as 0, the RLC*ᵢ* entity has deactivated the service splitting function.

As an embodiment of the example 2, when RLC entities for the service splitting function have reached a maximum retransmission count, the network device is notified.

For example, the base station may be notified, such as a notification message is sent to the base station, when the second RLC entities have reached the maximum retransmission count. The base station may perform a subsequent action, such as deactivating the splitting function of the RLC entity.

It needs to be noted that, in above examples, an activation indication of the service splitting function may be controlled for per split RLC entity (reference to the above embodiment), or may be uniformly controlled for all service splitting RLC entities. For example, the network device sends one command to simultaneously activate or deactivate service splitting functions of all service splitting RLC entities.

### Example 3:

Based on the example 1, the network device 101 may activate a PDCP packet duplication function for an RLC entity corresponding to a specific service.

As an embodiment of this example, a granularity of activated PDCP packet duplication may be refined to the RLC entity, that is, configure a plurality of RLC entities (the plurality of RLC entities may be called as RLC entities that activate the packet duplication or second RLC entities, or called simply as duplicated RLC entities or other RLC entities rather than the primary RLC entity) for the RLC entity (the RLC entity may be called as an RLC entity that the PDCP packet duplication is activated or a first RLC entity, or called simply as a duplicated RLC entity, or the primary RLC entity) for packet duplication.

As an embodiment of this example, the packet duplication function of the RLC entity may be activated and deactivated.

### Instance 1: activation and deactivation of packet duplication for a certain RLC entity:

FIG. 7 is a schematic diagram of an MAC CE indicating an RLC entity to activate/deactivate a PDCP packet duplication function.

As shown in FIG. 7, the information field includes a first part of bits and a second part of bits.

The first part of bits indicates a first RLC ID. Assumed that a length of the first part of bits is 5 bits.

The second part of bits indicates whether a second RLC entity activates a packet duplication function. Assumed that a length of the second part of bits is 3 bits, in RLC*ᵢ*, *"i"* is configured for the second RLC entity, for example, a logical channel identifier of a secondary RLC entity in an ascending order in an MCG and an SCG, that is, *"i"* represents an index of the second RLC entity. In FIG. 7, *"i"* may be 0, 1, or 2.

When a bit corresponding to the RLCᵢ is set as 1, an RLC*ᵢ* entity has activated the packet duplication function, and the service data of the first RLC entity (or called as the duplicated RLC entity) may be copied and sent to the RLC*ᵢ* entity. When the bit corresponding to the RLCᵢ is set as 0, the RLC*ᵢ* entity has deactivated the packet duplication function.

As an embodiment of the example, when the second RLC entities have reached a maximum retransmission count, the network device is notified.

For example, the base station may be notified when the second RLC entities corresponding to a certain RLC entity (the first RLC entity) reach the maximum retransmission count, such as, a notification message is sent. The base station may perform a subsequent action, such as deactivating the packet duplication function of the second RLC entity.

It needs to be noted that in above examples, an activation indication of the packet duplication function of a split RLC entity may be controlled by a granularity of per split RLC entity, or controlled for each second RLC entity corresponding to each split RLC entity (the first RLC entity) (as in above embodiments), or controlled uniformly, for example:
the network device 101 may activate/deactivate packet duplication for a certain split RLC entity via one control instruction, or the network device 101 may activate/deactivate packet duplication for all split RLC entities via one control instruction.

Based on a same idea as above method embodiments, the embodiments of the present disclosure also provide an apparatus for sending configuration information that may have functions of the network device 101 in the above method embodiments and may be used to perform steps provided by the above method embodiments to be performed by the network device 101. The functions may be realized by hardware, or by executing corresponding software by hardware. The hardware or software includes one or more units or modules corresponding to the above functions.

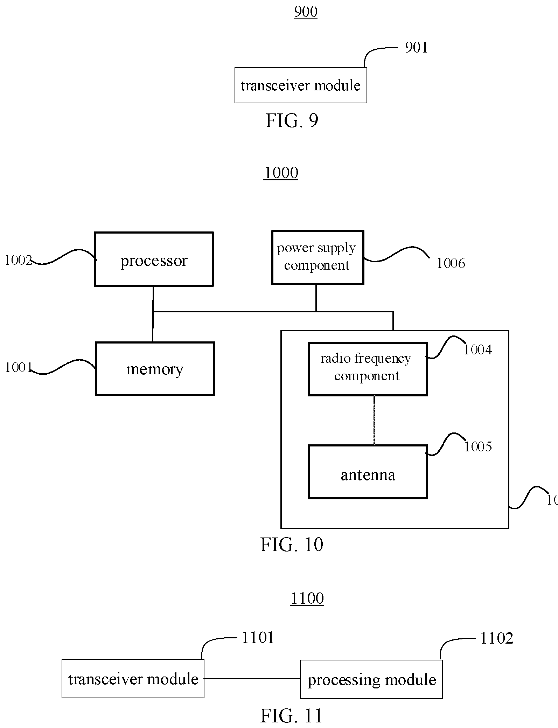

In one possible implementation, an apparatus 900 shown in FIG. 9 may be taken as the network device 101 in the above method embodiments and perform steps performed by the network device 101 in the above method embodiments As shown in FIG. 9, the apparatus 900 may include a transceiver module 901, in which the transceiver module 901 may be used to support a communication device to communicate, and the transceiver module 901 may be equipped with a wireless communication function, such as being able to communicate wirelessly with other communication devices via an NR.

When performing steps implemented by the network device 101, the transceiver module 901 is configured to send configuration information to the UE. The configuration information includes N types of RLC entities corresponding to a PDCP entity of the UE.

When the communication device is the network device 101, its structure may also be shown in FIG. 10. A base station is taken as an example to show the structure of the communication device. As shown in FIG. 10, a device 1000 includes a memory 1001, a processor 1002, a transceiver component 1003, and a power supply component 1006. The memory 1001 is coupled with the processor 1002, which may be used to store programs and data necessary to implement various functions of the communication device 1000. The processor 1002 is configured to support the communication device 1000 to perform corresponding functions in the above method, which may be implemented by calling a program stored in the memory 1001. The transceiver component 1003 may be a wireless transceiver that may be used to support the communication device 1000 to receive signaling and/or data via the NR, and to send the signaling and/or the data. The transceiver component 1003 may also be called a transceiver unit or a communication unit, and may include a radio frequency component 1004 and one or more antennas 1005. The radio frequency component 1004 may be a remote radio unit (RRU), which may be specifically configured for transmission of a radio frequency signal and conversion of the radio frequency signal and a baseband signal. The one or more antennas 1005 may be specifically configured for radiating and receiving the radio frequency signal.

When the communication device 1000 needs to send data, the processor 1002 may perform baseband processing on data to be sent and output the baseband signal to a radio frequency unit, and the radio frequency unit will perform radio frequency processing on the baseband signal and send the radio frequency signal via an antenna in a form of electromagnetic wave. When there is data sent to the communication device 1000, the radio frequency unit receives the radio frequency signal via the antenna, converts the radio frequency signal into the baseband signal, and outputs the baseband signal to the processor 1002, which converts the baseband signal into data and processes the data.

Based on a same idea as above method embodiments, the embodiments of the present disclosure also provide an apparatus for receiving configuration information that may have functions of the UE 102 in the above method embodiments and may be used to perform steps provided by the above method embodiments to be performed by the UE 102. The functions may be realized by hardware, or by executing corresponding software by hardware. The hardware or software includes one or more units or modules corresponding to the above functions.

In one possible implementation, the device 1100 shown in FIG. 11 may be taken as a UE 102 in the method embodiments and perform steps performed by the UE 102 in the method embodiments. As shown in FIG. 11, the device 1100 may include a transceiver module 1101 and a processing module 1102 that are mutually coupled, in which the transceiver module 1101 may be used to support the communication device to communicate, and the transceiver module 1101 may be equipped with a wireless communication function, such as being able to communicate wirelessly with other communication devices via the NR. The processing module 1102 may be used by the communication device to perform a processing operation, such as generating information/a message to be sent, or processing a received signal to obtain information/a message.

When performing the steps performed by the UE 102, the transceiver module 1101 is configured to receive the configuration information sent by the network device, in which the configuration information includes N types of RLC entities corresponding to a PDCP entity of the UE.

The processing module 1102 is configured to send service data to at least one type of RLC entity based on the configuration information.

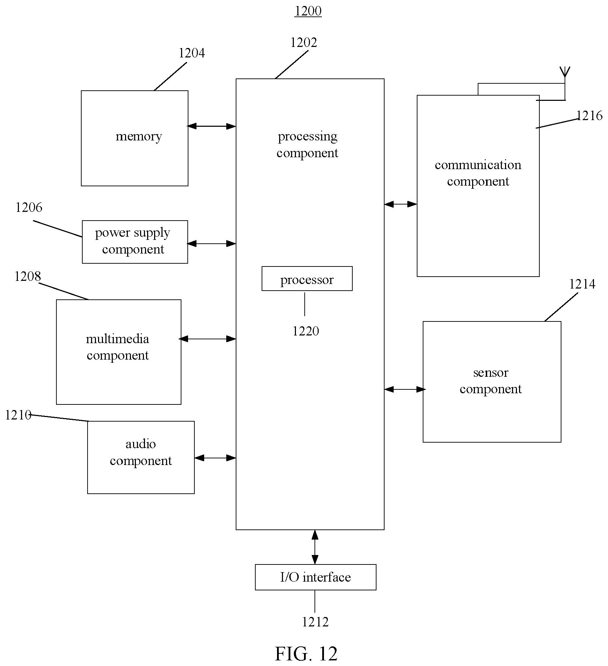

When a device that receives the indication information is the UE 102, its structure may also be as shown in FIG. 12. The device 1200 may be a mobile phone, a computer, a digital broadcast user device, a message sending and receiving device, a game console, a tablet device, a medical device, a fitness device, a personal digital assistant, etc.

Referring to FIG. 12, the device 1200 may include one or more of: a processing component 1202, a memory 1204, a power supply component 1206, a multimedia component 1208, an audio component 1210, an input/output (I/O) interface 1212, a sensor component 1214, and a communication component 1216.

The processing component 1202 typically controls overall operations of the device 1200, such as those associated with a display, a telephone call, a data communication, a camera operation, and a recording operation. The processing component 1202 may include one or more processors 1220 to execute instructions to generate all or part of steps of the above methods. In addition, the processing component 1202 may include one or more modules to facilitate an interaction between the processing component 1202 and other components. For example, the processing component 1202 may include a multimedia module to facilitate an interaction between the multimedia component 1208 and the processing component 1202.

The memory 1204 is configured to store various types of data to support operations on the device 1200. Examples of these data include instructions of any application or method used to operate on the device 1200, contact data, phone book data, messages, pictures, videos, etc. The memory 1204 may be implemented by any type of volatile or non-volatile memory or their combination, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The power supply component 1206 provides power to the various components of the device 1200. The power supply component 1206 may include a power management system, one or more power supplies, and other components associated with generating, managing, and distributing power for the device 1200.

The multimedia component 1208 includes a screen that provides an output interface between the device 1200 and the user. In some embodiments, the screen may include a liquid crystal display (LCD) and a touch panel (TP). If the screen includes a TP, the screen may be a touch screen to receive signals input by the user. The touch panel includes one or more touch sensors to sense a touch, swiping, and gesture on the touch panel. The touch sensor may not only sense a boundary of a touch or sliding action, but also detect a duration and pressure associated with a touch or sliding operation. In some embodiments, the multimedia component 1208 includes a front camera and/or a rear camera. When the device 1200 is in an operating mode, such as a shooting mode or a video mode, the front camera and/or the rear camera may receive external multimedia data. Each front camera or each rear camera may be a fixed optical lens system or has a focal length and an optical zoom capability.

The audio component 1210 is configured to output and/or input audio signals. For example, the audio component 1210 includes a microphone (MIC) that is configured to receive external audio signals when the device 1200 is in an operational mode, such as a call mode, a recording mode, and a speech recognition mode. The received audio signal may be further stored in the memory 1204 or transmitted via a communication component 1216. In some embodiments, the audio component 1210 also includes a speaker for the output of an audio signal.

The I/O interface 1212 provides an interface between the processing component 1202 and the peripheral interface module. The peripheral interface module may be a keyboard, a click wheel, a button, etc. The button may include, but is not limited to: a home button, a volume button, a start button, and a locking button.

The sensor component 1214 includes one or more sensors to provide a condition assessment of various aspects of the device 1200. For example, the sensor component 1214 may detect an on/off state of the device 1200, and a relative positioning of the component. For example, the component is a display and a keypad of the device 1200, the sensor component 1214 may also detect a change of the position of the device 1200 or a change of one component of the device 1200, detect a presence or an absence of a contact between the user and with the UE 1200, detect a direction of the device 1200, or detect an acceleration/deceleration and detect a temperature change of the device 1200. The sensor component 1214 may include a proximity sensor configured to detect the presence of nearby objects without any physical contact. The sensor component 1214 may also include an optical sensor, such as a CMOS or CCD image sensor, for using in an imaging application. In some embodiments, the sensor component 1214 may also include an acceleration sensor, a gyroscope sensor, a magnetic sensor, a pressure sensor, or a temperature sensor.

The communication component 1216 is configured to facilitate a wired or wireless communication between the device 1200 and other devices. The device 1200 may access a wireless network based on a communication standard, such as WiFi, 2G or 3G, or their combination. In an exemplary embodiment, the communication component 1216 receives a broadcast signal or broadcast-related information from an external broadcast management system via a broadcast channel. In an exemplary embodiment, the communication component 1216 also includes a near-field communication (NFC) module to facilitate a short-range communication. For example, the NFC module may be implemented based on a radio frequency identification (RFID) technology, an infrared data association (IrDA) technology, an ultra-wide band (UWB) technology, a bluetooth (BT) technology and other technologies.

In exemplary embodiments, the device 1200 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In exemplary embodiments, a non-transitory computer readable storage medium including instructions is also provided, such as a memory 1204 including instructions. The instructions may be executed by the processor 1220 of the device 1200 to implement the above methods. For example, the non-transitory computer readable storage medium may be a read-only memory (ROM), a random access memory (RAM), a compact disc read-only memory (CD-ROM), a magnetic tape, a floppy disk, and an optical data storage device.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

### INDUSTRIAL UTILITY

In the method of the present disclosure, a network device sends configuration information to configure N types of RLC entities associated with a PDCP entity for a user equipment (UE). Therefore, the UE may effectively split service data based on the configuration information to improve a transmission efficiency of the service data.

## Claims

1. A method for sending configuration information, performed by a network device, comprising:
sending configuration information to a user equipment (UE), wherein the configuration information comprises N types of radio link control (RLC) entities corresponding to a packet data convergence protocol (PDCP) entity of the UE.

2. The method of claim 1, wherein N is a numeric count of service types of service data, and the configuration information is further configured to configure each type of RLC entity for transmission of service data corresponding to a service type.

3. The method of claim 1, wherein the configuration information is further configured to configure a default RLC entity, the default RLC entity is configured for transmission of a first service.

4. The method of any one of claims 1 to 3, wherein the each type of RLC entity comprises at least one RLC entity.

5. The method of claim 1, wherein the configuration information comprises indication identifiers corresponding to the N types of RLC entities, and the indication identifiers indicate whether first functions of some or all types of RLC entities are activated.

6. The method of claim 1, further comprising:
sending first indication information to the UE, wherein the first indication information indicates to activate or deactivate first functions of some or all types of RLC entities.

7. The method of claim 5 or 6, wherein the first function comprises a service splitting function or a packet duplication function.

8. The method of claim 6 or 7, wherein sending the first indication information to the UE comprises:
sending downlink control information (DCI) to the UE, wherein the DCI comprises the first indication information; or
sending media access control control element (MAC CE) signaling to a UE, wherein the MAC CE signaling comprises an information field indicating the first indication information.

9. The method of claim 8, wherein
the information field comprises at least one of: a bit corresponding to all types of RLC entities, a bit corresponding to each type of RLC entity, or a bit corresponding to each RLC entity; and
activation of the first function of the RLC entity corresponding to a bit is indicated in response to the bit being a first value.

10. The method of any one of claims 5 to 7, further comprising:
receiving a notification message of the UE, wherein the notification message indicates that a numeric count of retransmissions of service data by an RLC entity for the first function has reached a maximum retransmission count.

11. A method for receiving configuration information, performed by a user equipment (UE), comprising:
receiving configuration information sent by a network device, wherein the configuration information comprises N types of radio link control (RLC) entities corresponding to a packet data convergence protocol (PDCP) entity of the UE; and
sending service data to at least one type of RLC entity based on the configuration information.

12. The method of claim 11, wherein N is a numeric count of service types of the service data, and the configuration information is further configured to configure each type of RLC entity for transmission of service data corresponding to a service type;
wherein sending the service data to the at least one type of RLC entity based on the configuration information comprises:
splitting and sending the service data to an RLC entity with a type corresponding to a service type of the service data based on the configuration information and the service type of the service data.

13. The method of claim 11, wherein the configuration information is further configured to configure a default RLC entity, and the default RLC entity is configured for transmission of a first service.

14. The method of claim 13, wherein sending the service data to the at least one type of RLC entity based on the configuration information comprises:
splitting and sending the service data to the default RLC entity in response to the service data being the first service.

15. The method of claim 13, wherein sending the service data to the at least one type of RLC entity based on the configuration information comprises:
splitting and sending the service data to the default RLC entity in response to the RLC entity corresponding to the service data deactivating a service splitting function.

16. The method of claim 15, further comprising:
determining whether first functions of some or all types of RLC entities are activated based on indication identifiers in the configuration information.

17. The method of any one of claims 11 to 16, further comprising:
receiving first indication information sent by the network device, wherein the first indication information indicates to activate or deactivate first functions of some or all types of RLC entities; and
determining whether the first functions of some or all types of RLC entities are activated based on the first indication information.

18. The method of claim 17, wherein the first function comprises a service splitting function or a packet duplication function.

19. The method of claim 17, wherein receiving the first indication information sent by the network device comprises:
receiving media access control control element (MAC CE) signaling sent by the network device, wherein the MAC CE signaling comprises an information field indicating the first indication information.

20. The method of claim 19, wherein determining whether the first functions of some or all types of RLC entities are activated based on the first indication information comprises:
determining that a first function of an RLC entity corresponding to at least one bit is activated in response to the at least one bit in the information field being a first value.

21. The method of claim 17, further comprising:
sending a notification message to the network device in response to a numeric count of retransmissions of the service data by an RLC entity for the first function reaching a maximum retransmission count.

22. An apparatus for sending configuration information, configured in a network device, comprising:
a transceiver module, configured to send configuration information to a user equipment (UE), wherein the configuration information comprises N types of radio link control (RLC) entities corresponding to a packet data convergence protocol (PDCP) entity of the UE.

23. An apparatus for receiving configuration information, configured in a user equipment (UE), comprising:
a transceiver module, configured to receive configuration information sent by a network device, wherein the configuration information comprises N types of radio link control (RLC) entities corresponding to a packet data convergence protocol (PDCP) entity of the UE; and
a processing module, configured to send service data to at least one type of RLC entity based on the configuration information.

24. A communication apparatus, comprising a processor and a memory, wherein
the memory is configured to store a computer program; and
the processor is configured to execute the computer program to implement the method of any one of claims 1 to 10.

25. A communication apparatus, comprising a processor and a memory, wherein
the memory is configured to store a computer program; and
the processor is configured to execute the computer program to implement the method of any one of claims 11 to 21.

26. A computer readable storage medium for storing instructions, which, when called and executed by a computer, cause the computer to implement the method of any one of claims 1 to 10.

27. A computer readable storage medium for storing instructions, which, when called and executed by a computer, cause the computer to implement the method of any one of claims 11 to 21.
